(19) Europäisches Patentamt
European Patent Office
Office européen des brevets

(11) **EP 3 652 854 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**18.03.2026 Patentblatt 2026/12**

(45) Hinweis auf die Patenterteilung:
**23.03.2022 Patentblatt 2022/12**

(21) Anmeldenummer: **18785260.3**

(22) Anmeldetag: **20.09.2018**

(51) Internationale Patentklassifikation (IPC):
**H02P 21/12** (2016.01) **H02P 21/02** (2006.01)
**H02P 21/00** (2016.01)

(52) Gemeinsame Patentklassifikation (CPC):
**H02P 21/12; H02P 21/0089; H02P 21/02; Y02P 80/10**

(86) Internationale Anmeldenummer:
**PCT/EP2018/075508**

(87) Internationale Veröffentlichungsnummer:
**WO 2019/063419 (04.04.2019 Gazette 2019/14)**

(54) **ENERGIEEFFIZIENTE ASYNCHRONMASCHINE**

ENERGY EFFICIENT ASYNCHRONOUS MACHINE

MACHINE ASYNCHRONE À EFFICACITÉ ÉNERGÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2017 EP 17194133**

(43) Veröffentlichungstag der Anmeldung:
**20.05.2020 Patentblatt 2020/21**

(73) Patentinhaber: **Siemens Aktiengesellschaft**
**80333 München (DE)**

(72) Erfinder: **NEMETH-CSOKA, Mihaly**
**91056 Erlangen (DE)**

(74) Vertreter: **Siemens Patent Attorneys**
**Postfach 22 16 34**
**80506 München (DE)**

(56) Entgegenhaltungen:
EP-A1- 2 131 488    EP-A1- 2 131 488
EP-A1- 2 811 644    EP-A1- 2 811 644

WO-A1-2012/037983    DE-A1- 102009 025 390
DE-A1- 102011 118 480    DE-A1- 102013 209 347
DE-A1- 102013 209 347    DE-A1- 102014 213 985
DE-A1- 102014 213 985    DE-A1- 102016 000 743
DE-B3- 102006 045 044

- KIRSCHEN DANIEL S., NOVOTNY DONALD W., LIPO THOMAS A.: "Optimal Efficiency Control of an Induction Motor Drive", IEEE TRANSACTIONS ON ENERGY CONVERSION., IEEE SERVICE CENTER, PISCATAWAY, NJ., US, vol. EC-2, no. 1, 1 March 1987 (1987-03-01), US , pages 70 - 76, XP093023809, ISSN: 0885-8969, DOI: 10.1109/TEC.1987.4765806
- KIRSCHEN DANIEL S. ET AL: "On-Line Efficiency Optimization of a Variable Frequency Induction Motor Drive", IEEE TRANSACTIONS ON INDUSTRY APPLICATIONS., IEEE SERVICE CENTER, PISCATAWAY, NJ., US, vol. IA-21, no. 3, 1 May 1985 (1985-05-01), US , pages 610 - 616, XP093023812, ISSN: 0093-9994, DOI: 10.1109/TIA.1985.349717

**Beschreibung**

Die Erfindung betrifft eine Asynchronmaschine. Asynchronmaschinen können in einem Betriebspunkt oder in verschiedenen Betriebspunkten betrieben werden. Hierfür sind verschiedene Steuerungen bzw. Regelungen vorsehbar.

Für die Steuerung und/oder Regelung der Asynchronmaschine sind verschiedenste Konzepte bekannt.

Die EP 0 019 138 B1 zeigt ein Verfahren zur Regelung einer umrichtergespeisten Asynchronmaschine. Aus der Regelabweichung zwischen einem vorgegebenen Drehzahl-Sollwert und einem Ersatz-Istwert wird ohne Erfassung der Läuferdrehzahl eine einem Soll-Wirkstrom entsprechende Stromsteuergröße gebildet. Die Amplitude des Umrichter-Ausgangsstromes wird entsprechend der Amplitude eines aus dem Soll-Wirkstrom und einem vorgegebenen Fluss entsprechenden Soll-Magnetisierungsstrom gebildeten Soll-Ständerstromes geregelt. Aus Istwerten von Ständerstrom und Ständerspannung werden die Istwerte des Wirkstromes und des Flussbetrages berechnet und daraus wird als Quotient eine Lastzustandsgröße gebildet die in stationären Betrieb dem Tangens des Lastwinkels entspricht. Die Frequenz des Umrichter-Ausgangsstromes wird mit einer Frequenzsteuergröße gesteuert, die aus der Regelabweichung des Istwertes und eines aus der Stromsteuergröße gebildeten Sollwertes der Lastzustandsgröße gebildet wird. Als Ersatz-Istwert wird die Frequenzsteuergröße verwendet.

Aus der WO 2005/018086 A1 ist ein Verfahren zur gesteuerten Einprägung eines Ständerstrom-Sollwertes und eines Drehmoment-Sollwertes für eine stromrichtergespeiste Drehfeldmaschine bekannt, wobei in Abhängigkeit eines vorbestimmten Rotorfluss-Sollwertes und eines ermittelten Rotorfluss-Istwertes eine feldbildende Stromkomponente des Ständerstrom-Sollwertes und in Abhängigkeit eines vorbestimmten Drehmoment-Sollwertes, des ermittelten Rotorfluss-Istwertes und einer ermittelten drehmomentbildenden Stromkomponente eines gemessenen Ständerstromes eine drehmomentbildende Stromkomponente des Ständerstrom-Sollwertes berechnet werden, wobei in Abhängigkeit einer ermittelten Rotorschlupffrequenz und einer Kreisfrequenz ein Ständerkreisfrequenz-Istwert bestimmt wird, wobei aus diesen berechneten Werten in Abhängigkeit der Parameter frequenzabhängige Streuinduktivität und Ständerwiderstand als Stellgröße das Integral der Ständerspannung berechnet wird, aus dem eine aus abgespeicherten offline optimierten Flussbahnkurven ausgewählte Flussbahnkurve abgeleitet wird.

Auch aus der DE 41 38 066 B4 ist eine weitere feldorientierte Regelung bekannt. Die Struktur der feldorientierten Regelung ist entscheidend für die Genauigkeit des Wirkstrom-Istwertes und des Flusses $\Psi$ und somit auch für die Genauigkeit des Adaptionsverfahrens. Zur Verbesserung der Genauigkeit kann ein Läufertemperaturmodell verwendet werden.

Aus der DE 195 24 654 A1 ist ein Verfahren zur geberlosen feldorientierten Regelung einer Asynchronmaschine bekannt. Hier wird ein Maschinenmodell verwendet um Schätzwerte z.B. für den Ständerwiderstand zu bilden.

Aus der EP 0 771 067 B1 ist der Einsatz eines weiteren Temperaturmodells für einen Läuferwiderstand bekannt.

EP 2 131 488 A1 offenbart eine Elektrofahrzeugsteuereinrichtung für einen AC-Motor, wobei die Elektrofahrzeugsteuereinrichtung eine Vektorsteuerung mit einer Vektorsteuerbefehlswertberechnungseinheit aufweist, welche ausgelegt ist, aus einem Drehmomentbefehlswert für den AC-Motor einen ersten Magnetflussbefehlswert zu generieren, bei dem ein Verlust des AC-Motors minimiert ist.

DE 10 2013 209347 A1 offenbart ein Verfahren zum Simulieren einer feldorientierten Schlupfkreisfrequenz einer Asynchronmaschine mittels eines Models, insbesondere eines Maschinenmodels, bereitgestellt, wobei die Asynchronmaschine drehgeberfrei, feldorientiert und mit einer stufig einstellbaren Spannung betrieben wird, mit Bereitstellen eines feldorientierten Statorstroms eines Stators der Asynchronmaschine, Bereitstellen einer simulierten feldorientierten Rotorflussverkettung eines Rotors der Asynchronmaschine und Simulieren der feldorientierten Schlupfkreisfrequenz basierend auf dem feldorientierten Statorstroms und der simulierten feldorientierten Rotorflussverkettung.

EP 2 811 644 A1 offenbart eine Motorsteuerungsvorrichtung zur effizienten Reduzierung der Motorverluste im Niedergeschwindigkeitsbereich oder im Antriebsbereich bei leichter Last abhängig vom Motorfluss.

DE 10 2014 213985 A1 offenbart eine Flussmodus-Steuerung zum Steuern eines felderregenden Stroms für einen elektrischen Antriebsmotor eines Fahrzeugs umfasst eine Antriebsmoment-Voraussagevorrichtung zum Vorhersagen eines voraussichtlichen Antriebsmomentbedarfs und eine Erregerstrombedarf-Ermittlungsvorrichtung zum Ermitteln einer neuen Vorgabe für einen felderregenden Strom, der für ein Erzeugen eines Antriebsmoments gemäß dem voraussichtlichen Antriebsmomentbedarf erforderlich ist.

Bei Asynchronmaschinen wird zunehmend gefordert, diese energieeffizient zu betreiben. Eine Aufgabe der Erfindung ist es die Regelung und/oder Steuerung einer Asynchronmaschine zu verbessern. Dadurch ist es möglich die Asynchronmaschine effizienter zu betreiben.

Eine Lösung der Aufgabe ergibt sich nach einem Verfahren zur Ermittlung eines Flusses einer Asynchronmaschine nach Anspruch 1 bzw. gemäß einer Vorrichtung zur Bestimmung eines Flusses einer Asynchronmaschine, nach Anspruch 7. Asynchronmaschinen können im Spannungsstellbereich mit dem Nennfluss der Asynchronmaschine betrieben werden. Ein vorgegebener Lastzustand (festes Drehmoment und feste Drehzahl) kann aber auch mit einem anderen Flussbetrag erreicht werden. Der Flussbetrag ist in einem Bereich von etwa 50% bis 120% (je nach Lastzustand) frei wählbar. Dieser Freiheitsgrad kann zur Optimierungen, z.B. zur Wirkungsgradoptimierung eingesetzt werden.

Bei einem Verfahren zur Ermittlung eines Flusses einer Asynchronmaschine, wird der Fluss in Abhängigkeit eines Verlustes der Asynchronmaschine eingestellt. So kann der Wirkungsgrad der Asynchronmaschine durch eine Verkleinerung/Minimierung des Verlustes der Asynchronmaschine verbessert/optimiert werden (Verlustoptimierung).

In einer Ausgestaltung des Verfahrens, welche nicht Teil der Erfindung ist, wird dabei eine nichtlineare Sättigungskennlinie verwendet. Mittels der nichtlinearen Sättigungskennlinie lässt der Verlust genauer berechnen. Bei einer Asynchronmaschine gibt es verschiedene Bereiche, welche für den Verlust von Relevanz sein können. Diese Bereiche sind beispielsweise ohmsche Verluste im Ständer, ohmsche Verluste im Rotor, Eisenverluste, mechanische Verluste, etc. Zu den mechanischen Verlusten zählen Reibungsverluste wie Verluste in einem Lager. Auch Ventilationsverluste, welche bei einer Kühlung auftreten können, tragen zu den Gesamtverlusten bei. Bei eigenbelüfteten Maschinen ändert sich der Leistungsbedarf proportional zur dritten Potenz der Drehzahl. Strömungsverluste, die durch Luftwirbel zwischen Ständer und Rotor auftreten, können auch Berücksichtigung finden, sind aber in der Regel klein und damit ggf. auch vernachlässigbar.

Bei einer Bestimmung der Verlustleistung kann man zwischen einer direkten und einer indirekten Bestimmung der Verlustleistung unterscheiden. Bei der direkten Bestimmung werden die Verlustarten durch gezielte Messungen erfasst. Bei einer indirekten Messung werden Eingangs- und Ausgangsleistungen definiert. Die Verlustleistung wird als Unterschied definiert. Da es sich bei dieser Differenzbildung um zwei etwa gleich große Größen handelt, sind die Einzelleistungen $P_{in}$ und $\boldsymbol{P_{out}}$ recht genau zu bestimmen, um die Verlustleistung $\boldsymbol{P_v}$ in einer genügenden Genauigkeit zu erhalten: $P_v = P_{in} - P_{out}$. Obwohl die mechanischen Verluste zum Teil sehr relevant sind, spielen sie bei der Energieoptimierung durch den Umrichter dennoch keine Rolle, weil ein durch Drehzahl und Drehmoment festgelegter Arbeitspunkt keinen freien Spielraum lässt. Die Reduzierung dieser Verlustart ist durch konstruktive Maßnahmen z.B. Fremdbelüftung möglich.

Alle Arten von Verlusten, die nicht einzeln berücksichtigt sind, werden als "Zusatzverluste" beschrieben, wie z.B. in DIN EN 60034-2-1 definiert.

In einer Ausgestaltung des Verfahrens wird der Verlust mittels eines Modells ermittelt. Das Modell berücksichtigt insbesondere Verluste im Motor, also in der elektrischen Maschine. Dies sind insbesondere ohmsche Verluste, ohmsche Verluste im Ständer der elektrischen Maschine und/oder ohmsche Verluste im Rotor der elektrischen Maschine. Auch Eisenverluste sind Verluste der elektrischen Maschine, welche im Modell berücksichtigt werden können. Da die Rotorfrequenz im stationären Zustand vergleichsweise gering ist, können die Grundschwingungseisenverluste im Rotor gegenüber denen im Ständer praktisch vernachlässigt werden. Im Umrichterbetrieb sind die Eisenverluste wegen des signifikanten harmonischen Anteils (Strom, Spannung) höher als im Netzbetrieb. In einem Ersatzschaltbild für die elektrische Maschine kann z.B. der Eisenverlust durch einen Widerstand parallel zur Hauptinduktivität berücksichtigt werden. Im Modell können auch Hystereseverluste mit berücksichtigt werden. Die Hystereseverluste können die Eisenverluste im Spannungsstellbereich dominieren. Sie ergeben sich wie folgt:

$$P_h = k_h * f * \psi^2 \quad .$$

Im Modell können auch Wirbelstromverluste mit berücksichtigt werden. Die Wirbelstromverluste können die Eisenverluste im Feldschwächenbereich dominieren. Sie ergeben sich wie folgt:

$$P_w = k_w * f^2 * \psi^2 \quad .$$

In einer Ausgestaltung des Verfahrens, welche nicht Teil der Erfindung ist, ist im Modell eine nichtlineare Sättigungskennlinie berücksichtigt. Diese Kennlinie kann direkt im Modell hinterlegt sein.

In einer Ausgestaltung des Verfahrens wird der Verlust mittels eines Modells ermittelt, wobei zur Verkleinerung (Minimierung) des Verlustes der Fluss entweder unter 100% reduziert wird, oder auf über 100% erhöht wird.

Asynchronmaschinen können im Spannungsstellbereich mit dem Nennfluss der Asynchronmaschine bei 100% Fluss betrieben werden. Ein vorgegebener Lastzustand (festes Drehmoment und feste Drehzahl) kann aber auch mit einem anderen Flussbetrag erreicht werden. Der Flussbetrag ist beispielsweise in einem Bereich von etwa 50% bis 120% (je nach Lastzustand) wählbar. Durch den gewählten Fluss wird der Verlust der Asynchronmaschine beeinflusst. Abhängig vom Betriebszustand der Asynchronmaschine kann eine Erhöhung des Flusses über 100% des Nennflusses zu einer Verkleinerung des Verlustes führen.

In einer Ausgestaltung des Verfahrens, welche nicht Teil der Erfindung ist, wird ein neuer einzustellender Fluss für einen minimalen Verlust nicht durch ein iteratives Herantasten an den minimalen Verlust durch iteratives Einstellen des Flusses erreicht. In einer Ausgestaltung des Verfahrens wird ein Fluss ermittelt, bei dem der Verlust ein Minimum hat und in einem Schritt dieser ermittelte Fluss eingestellt.

In einer Ausgestaltung des Verfahrens weist das Modell der elektrischen Maschine ein thermisches Modell auf. Zumindest ein Teil der Verluste in der Asynchronmaschine ist mit dem thermischen Motormodell berechenbar. Das thermische Modell kann auch für den Motorschutz und eine Widerstandsadaption verwendet werden. Die Berechnung des thermischen Modells wird in einer Ausgestaltung (auch) für die Wirkungsgradoptimierung eingesetzt.

In einer Ausgestaltung des Verfahrens, welche nicht Teil der Erfindung ist, werden die ohmschen Verluste berücksichtigt. Die ohmschen Verluste sind proportional zu dem Quadrat des Stromes und linear abhängig von dem Widerstand des Leiters. Dieser Widerstandswert ist temperaturabhängig und diese Abhängigkeit kann im Regelfall nicht vernachlässigt werden:

$$R_\vartheta = R_{20°C} * (1 + \alpha * \Delta T)$$

wobei der Faktor $\alpha$ materialabhängig ist.

Bei Kupfer ist der Wert $0,0039\frac{1}{K}$, bei Aluminium $0,004\frac{1}{K}$.

Es gilt die Faustregel, dass bei 100 K Temperaturerhöhung etwa 40% Widerstandserhöhung zu erwarten ist. Bei den Grundschwingungsfrequenzen im stationären Zustand spielt die Stromverdrängung oft keine besonders wichtige Rolle. Beim Umrichterbetrieb sind die Oberschwingungen in den Strömen und die dadurch verursachten ohmschen Verluste wegen der reduzierten Eindringtiefe aber nicht mehr zu vernachlässigen. Die Ersatzwiderstände für die n-ten Harmonischen $R_n$ können z.B. wiefolgt modelliert werden, wobei n die Ordnungszahl der entsprechenden Harmonischen und f die Frequenz der Harmonische (bezogen auf die Nennfrequenz) ist:

$$R_n = R_{s,DC} * (1 + k_n * f_n^{0.5}).$$

Die Parameter $k_n$ können mit der Finite-Elemente-Methode gewonnen werden. Die ohmschen Verluste im Ständer errechnen sich gemäß:

$$P_{s,Cu} = 3 * R_s * I\_s^2.$$

Bei der Messung von $R_s$ (Ständerwiderstand) ist darauf zu achten, dass der eventuell mitgemessene Kabelwiderstand zwar bei der Regelung zu berücksichtigen ist, sich aber nicht so temperaturabhängig ändert, wie der Widerstand der Ständerwicklung. Bei den ohmschen Verlusten im Ständer ist anzumerken, dass dazu sowohl die Längskomponente $i_d$ des Stroms als auch die entsprechende Querkomponente $i_q$ etwas beitragen. Ohmsche Verluste im Rotor (Läufer) sind gemäß der Gleichung

$$P_{r,Cu} = 3 * R_r * I\_r^2$$

berechenbar. Bei unter transienten Zuständen auftretenden Rotorfrequenzen sind die von Stromverdrängung verursachten Widerstandsänderungen eventuell nicht vernachlässigbar.

In einer Ausgestaltung des Verfahrens wird der Fluss (magnetische Fluss der elektrischen Maschine) bei einem minimalen Verlust eingestellt. Der Fluss wird also so gewählt, dass der Verlust minimal ist. Hierzu wird ein Modell der elektrischen Maschine verwendet, mit dem eine Berechnung des Verlustes möglich ist. Dies betrifft insbesondere nur einen Teil des Gesamtverlustes der elektrischen Maschine.

In einer Ausgestaltung des Verfahrens, welche nicht Teil der Erfindung ist, wird ein Längsstrom $I_d$ der elektrischen Maschine ungleich einem Querstrom $I_q$ der elektrischen Maschine eingestellt. Dies rührt aus der Erkenntniss, dass mit einer Bedingung $I_q=I_d$ in der Regel noch nicht der optimalste Betriebspunkt der elektrischen Maschine erzielbar ist.

In einer Ausgestaltung des Verfahrens wird der Wirkungsgrad der elektrischen Maschine optimiert. Zur Optimierung wird mittels eines Modells ein Verlust, z.B. ein ohmscher Verlust, welcher von der Temperatur abhängig ist, der elektrischen Maschine in einem Modell errechnet. Abhängig vom im Modell gewählten Fluss ändert sich der errechnete Verlust. An der elektrischen Maschine wird der Fluss eingestellt, welcher im Modell den geringsten Verlust ergab.

In einer Ausgestaltung des Verfahrens, welche nicht Teil der Erfindung ist, unterscheidet sich der Strombetrag beim eingestellten Fluss vom minimalen Strombetrag. Ergibt sich eine derartige Situation wird klar, dass ein optimaler effizienter Betrieb der elektrischen Maschine auch dann erreicht werden kann, wenn ein Fluss gewählt wird, bei dem der Strombetrag nicht minimal ist.

In einer Ausgestaltung des Verfahrens, welche nicht Teil der Erfindung ist, kann die Einstellung des Flusses lastunabhängig erfolgen. Aus einem vorgegebenen Lastzustand (gegeben durch Drehmoment und/oder Drehzahl) und dem bekannten Flussbetrag wird in einer Ausgestaltung des Verfahrens, welche nicht Teil der Erfindung ist, die aktuelle Verlustleitung berechnet. Dann wird für den gleichen Lastzustand bei einem angenommen etwas (z.B. etwa 5%) kleineren und einem größeren Flussbetrag die Verlustleistung berechnet. Die Differenzen zwischen den Flussbeträgen, welche zur Berechnung der Verlustleistung herangezogen werden, können sich auch in einem Band von 1% und 10% bewegen, bzw. aus diesem ausgewählt werden. Der Prozentsatz kann auch abhängig vom Betriebszustand der elektrischen Maschine gewählt werden. Aus den drei Verlustwerten (bei kleinerem Fluss, bei aktuellem Fluss, bei größerem Fluss) wird insbesondere durch parabolische Annäherung eine minimale Verlustleistung berechnet. Der zur minimalen Verlustleitung gehörige Fluss wird als optimaler Fluss eingestellt. Das Verfahren kann weitere Iterationsschritte aufweisen.

In einer Ausgestaltung des Verfahrens wird eine Änderung des Verlustes abhängig von einer Änderung des Flusses errechnet, wobei der Fluss in Abhängigkeit des errechneten Verlustes eingestellt wird. Dies kann als schnelles und stabiles Verfahren realisiert werden. Der Fluss wird insbesondere so eingestellt, dass der Wirkungsgrad den messtechnisch maximal erreichbaren Wert erreicht. Das Verfahren kann ohne eine Iteration durchgeführt werden. Wegen der direkten Berechnung (ohne Iteration) ist das Verfahren schneller und zuverlässiger als ein iteratives Verfahren. Eine Berücksichtigung des Eisenverlustes (welcher immerhin 15 bis 25% des Nennverlustes ausmachen kann und bei einem Verfahren welche die Bedingung $I_d = I_q$ berücksichtigt komplett vernachlässigt wird) ermöglicht die verbesserte, insbesondere maximale, Wirkungsgradoptimierung.

Das Verfahren ist nach den beschriebenen Ausgestaltungen insbesondere direkt, schnell und zuverlässig. Insbesondere werden dafür keine neuen Motorparameter benötigt, die bereits bekannten und vorhandenen Parameter sind ausreichend. Eine bislang vielleicht schon vorhandene Motordatenbank muss nicht erweitert werden. Das beschriebene Verfahren zur Ermittlung des Flusses der elektrischen Maschine für deren Optimierung, benötigt wenig Rechenzeit ist kostengünstig realisierbar.

Erfindungsgemäß wird der Verlust bei einem aktuellen Fluss im Betrieb der Asynchronmaschine, bei einem dazu reduzierten Fluss und bei einem ebenso dazu erhöhten Fluss berechnet, wobei mittels der errechneten Verluste das Minimum einer Kurve ermittelt wird, wobei der Fluss beim minimalen Verlust eingestellt wird. Bei einem aktuellen Fluss während des Betriebes der Asynchronmaschine wird also mittels des Modells (zur/für die Asynchronmaschine) ein aktueller Verlust errechnet. Ferner wird mittels des Modells ein Verlust errechnet, der sich einstellen würde, wenn der Fluss reduziert werden würde. Ferner wird mittels des Modells ein Verlust errechnet, der sich einstellen würde, wenn der Fluss erhöht werden würde. Die Reduzierung bzw. die Erniedrigung betrifft dabei eine angenommene Änderung zum aktuellen Fluss. Zum aktuellen Fluss, zum angenommenen reduzierten Fluss und zum angenommenen erhöhten Fluss werden die Verluste errechnet. Aus diesen Werten zu den Verlusten lässt sich eine Funktion bilden, insbesondere eine Polygonfunktion oder eine Parabelfunktion. Zu dieser gebildeten Funktion, welche den Verlust wiederspiegelt und vom Fluss abhängt, lässt sich ein Minimum finden, also ein Wert, bei dem der Verlust minimiert ist und/oder minimal ist. Der Wert des Flusses, bei dem der Verlust der Asynchronmaschine minimiert und/oder minimal ist, kann dann eingestellt bzw. angefahren werden. So ist die Einstellung des Flusses in einem Schritt möglich. Eine iterative Vorgehensweise zur Einstellung des besten Flusses ist damit nicht mehr notwendig. Die angenommenen Änderungen zum aktuellen Fluss, also die Werte des angenommenen erhöhten Flusses und des angenommenen reduzierten Flusses zur Berechnung zur Berechnung des Verlustes bzw. der Verlustfunktion sind insbesondere so zu wählen, dass diese zur Ausbildung einer Parabelfunktion bzw. einer Polygonfunktion ausreichen.

Eine Lösung der Aufgabe gelingt auch mittels einer Vorrichtung. Die Vorrichtung zur Bestimmung eines Flusses einer Asynchronmaschine weist ein Modell zur Berechnung eines Verlustes der Asynchronmaschine abhängig vom Fluss der Asynchronmaschine auf und eine Auswahleinrichtung zur Auswahl eines Flusses abhängig vom Verlust. Es ist der Fluss auszuwählen bei dem der Verlust im Vergleich am kleinsten ist.

In einer Ausgestaltung der Vorrichtung weist diese eine Aktivierungseinrichtung für die Vorrichtung auf. Damit ist eine Aktivierung abhängig von der Lastdynamik der Asynchronmaschine möglich.

In einer Ausgestaltung der Vorrichtung ist diese in einen Stromrichter integriert. So können Motordaten, die in dem Stromrichter gespeichert sind, mit verwendet werden. So kann auch die Rechenleistung des Stromrichters, welche zur Regelung der elektrischen Maschine vorhanden ist, mit genutzt werden.

Mittels der Vorrichtung kann eines der beschriebenen Verfahren durchgeführt werden, bzw. kann bei einem der Verfahren die Vorrichtung verwendet werden.

In einer Ausgestaltung, welche nicht Teil der Erfindung ist, werden bei einem energieoptimalen Betrieb der Asynchronmaschine Sättigungen und Eisenverluste bei der Berechnung des Sollwertes für den Fluss berücksichtigt.

Die Erfindung wird nachfolgend auf der Basis von Ausführungsbeispielen unter Bezugnahme auf die beiliegende Zeichnungen exemplarisch weiter erläutert, wobei gleichartige Elemente die gleichen Bezugszeichen aufweisen. Dabei zeigt:

FIG 1    eine Abhängigkeit des Wirkungsgrades einer Asynchronmaschine von einer Vorgabe des Flusses;
FIG 2    Beispiele für eine Verlustermittlung;
FIG 3    eine Asynchronmaschine mit einem Stromrichter;
FIG 4    Messwerte für Drehzahl, Strom und Motortemperatur;
FIG 5    Messwerte für den Fluss und eine errechnete Verlustleistung und

FIG 6     einen Vergleich verschiedener Optimierungen der Asynchronmaschine.

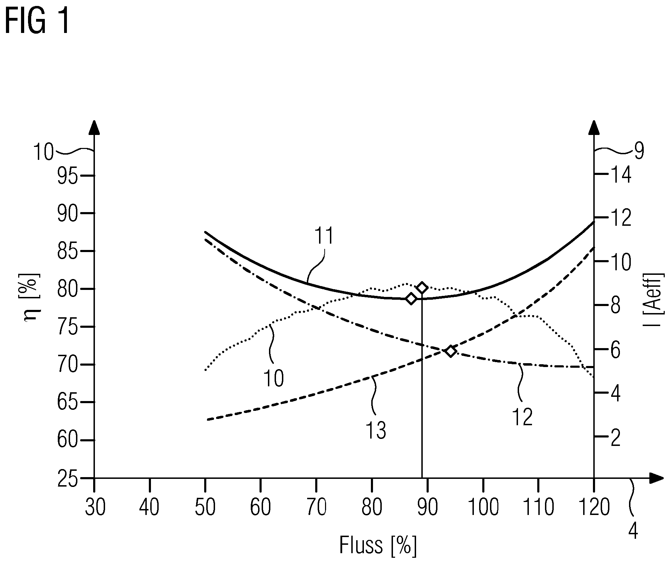

Die Darstellung nach FIG 1 zeigt ein Diagramm, welches bei einer Asynchronmaschine beispielhaft die Abhängigkeit des Wirkungsgrades η 10 vom Fluss ψ 4 zeigt. Dargestellt ist ferner bezüglich einer Achse 9 für den Strom $(I[A_{eff}])$ eine Kurve 11 für den Strombetrag I, eine Kurve 12 für den Querstromsollwert $I_{q\ soll}$ und eine Kurve 13 für den Sollwert der d-Komponenten des Stroms $I_{d\ soll}$. Der Schnittpunkt der Kurve 12 mit der Kurve 13 ist bei einem Wert für den Fluss 4, welcher größer ist als der Wert für den Fluss 4 beim Maximum der Kurve 10 für den Wirkungsgrad etwa (η). Das Minimum der Kurve 11 für den Strombetrag ist bei einem Wert für den Fluss 4, welcher kleiner ist als der Wert für den Fluss 4 beim Maximum der Kurve 10 für den Wirkungsgrad etwa (η). Dies zeigt, dass als eine Bedingung für die Einstellung des Flusses 4 zur Erreichung des maximalen Wirkungsgrad (Maximum der Kurve 10) noch verbesserbar ist und besser sein kann, als die Bedingungen Minimum des Strombetrages 11 oder Schnittpunkt der Kurven 12 und 13 ($I_{q\ soll} = I_{d\ soll}$).

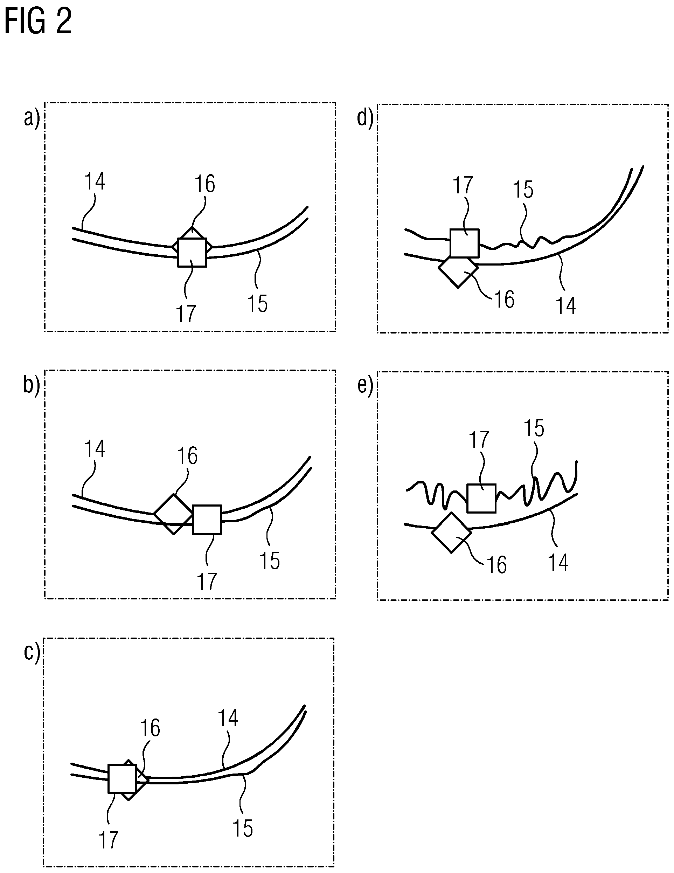

Die Darstellung nach FIG 2 zeigt Beispiele a) bis e) für die Verlustermittlung bei verschiedenen stationären Betriebszuständen einer Asynchronmaschine. Gezeigt sind eine Kurve 14 mit einer errechneten Verlustleistung, insbesondere dem Gesamtverlust und eine Kurve 15 mit einer Differenz aus gemessener Wirkleistung minus gemessener mechanischer Leistung. Die Kurve 14 weist jeweils ein Minium 16 auf, welches durch eine Raute gekennzeichnet ist. Die Kurve 15 weist jeweils ein Minimum 17 auf, welches durch ein Quadrat gekennzeichnet ist. Gezeigt ist jeweils die Abhängigkeit vom Fluss. Es zeigt sich, dass das Minimum der Kurve 15 stets in der Nähe des Minimums der Kurve 14 ist. Zur Optimierung der Asynchronmaschine wird somit ein Fluss gewählt, bei welchem der berechnete Verlust (die berechnete Verlustleistung) minimal ist.

Der Flussbetrag legt durch die Sättigungskennlinie den Wert für $I_{d\ soll}$ (i_sd) fest. Der Wert $I_{q\ soll}$ (i_sq) kann aus Flussbetrag und Drehmoment berechnet werden. Der Schlupf ergibt sich aus dem Rotorwiderstand, dem Querstrom und dem Flussbetrag. Damit ergibt sich auch die Ständerfrequenz. Damit sind alle Größen für ein thermisches Motormodell bekannt und die Motorverluste können eindeutig berechnet werden. Damit können sich folgende Gleichungen ergeben:

```
i_sq = k_t * Psi * m Querstrom
i_sd = f(Psi) Erregerstrom (Sättigungskennlinie
                           (bei Inbetriebnahme gemessen)
is^2 = i_sd^2 + i_sq^2 Ständerstrom
f_r = * R_r * i_sq / Psi / 2 / pi Rotorfrequenz
f_s = Zp * n + f_r Statorfrequenz
    Mit:
```

| • Flussbetrag | Psi |
|---|---|
| • Drehzahl | n |
| • Drehmoment | m |
| • Drehmomentfaktor | K_t |
| • Statorwiderstand (thermisch adaptiert) | R_s |
| • Rotorwiderstand (thermisch adaptiert) | R_r |
| • Polpaarzahl | Z_p |

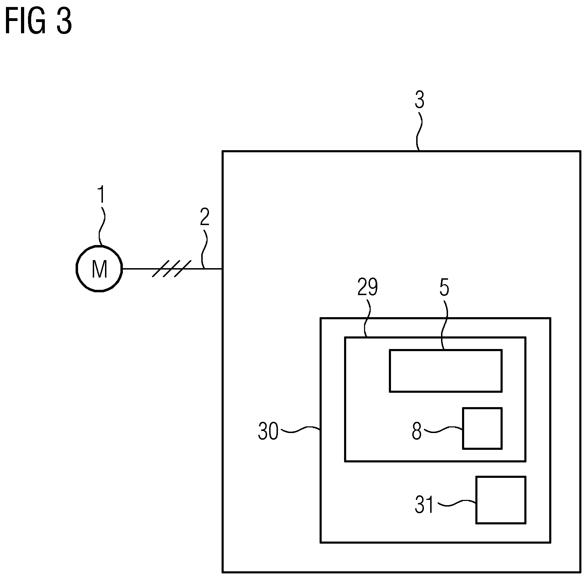

Die Darstellung nach FIG 3 zeigt eine Asynchronmaschine 1, welche über ein Stromkabel 2 von einem Stromrichter 3 speisbar ist. Der Stromrichter 2 weist eine Stromrichterregelung 30 auf. In diese ist ein Modell 5 integriert. Dieses Modell 5 betrifft beispielsweise ein Maschinenmodell (Motormodell) und/oder ein Temperaturmodell für die Maschine. Alternativ oder zusätzlich zum Temperaturmodell bzw. statt der Berechnung der Motorverluste können die Temperaturen der einzelnen Motormassen (Ständerwicklung, Läufer, Ständerblechpaket) gemessen werden. Die Temperaturen sind eine Art gefilterter Verluste. Je kälter ein Motor bei vorgegebenem Betriebszustand ist, desto energieoptimaler ist er. Eine Art Temperaturüberwachung der einzelnen Motorkomponenten mit untergelagerter Energieoptimierung ist auch vorstellbar.

Über eine Optimierungseinrichtung 29, in welche eine Auswahleinrichtung 8 integriert ist, dann eine Optimierung der Maschine erfolgen. Mit der Auswahleinrichtung 8 kann beispielsweise eine Optimierungsart eingestellt werden und/oder ein optimaler Fluss eingestellt (ausgewählt) werden. Die Optimierung betrifft insbesondere eine Optimierung des Wirkungsgrades. Dafür wird insbesondere aus berechneten Werten für Maschinenverluste bei unterschiedlich gewählten magnetische Flusswerten eine Kurve durch diese Werte gelegt und der Wert für den Fluss ausgewählt, bei welchem die mathematisch erzeugte Kurve ein Minimum aufweist. Zur Aktivierung der Optimierung ist eine Aktivierungseinrichtung 31 vorgesehen.

Der optimale Betriebspunkt der Asynchronmaschine, bzw. ein diesem nahekommender Betriebspunkt, befindet sich dort, wo die vom thermischen Motormodell berechneten Verluste am kleinsten sind. Aufbauend auf dieser Tatsache kann eine Suchfunktion für den einzustellenden Fluss realisiert werden. In einem stationären Zustand der Asynchronmaschine kann vor einer realen Änderung des Flusses, also vor einer Änderung des Sollwertes für den Fluss, ausgerechnet werden, ob sich eine Flussbetragsänderung in eine angenommene Richtung (z.B. Erhöhung des Flusses bzw. Reduzierung des Flusses) positiv oder negativ auf den Wirkungsgrad auswirken würde. Der Flussbetragssollwert wird dann entsprechend geändert.

Die Berechnung geht von dem vorgegebenen Lastzustand aus, damit die Drehzahl und das Drehmoment festgelegt sind. Dazu kommt noch der angenommene Flussbetrag. Der Flussbetrag legt durch die Sättigungskennlinie den I_sd fest. Der I_sq kann aus Flussbetrag und Drehmoment berechnet werden. Der Schlupf ergibt sich aus dem Rotorwiderstand, dem Querstrom und dem Flussbetrag. Damit ergibt sich auch die Ständerfrequenz. Damit sind alle Größen für das thermische Motormodell bekannt und die Motorverluste können eindeutig berechnet werden.

Der berechnete optimale Fluss wird beispielsweise zwischen 50% und 120% eingegrenzt. In der Regelung des Stromrichters für die Asynchronmaschine kann der berechnete optimale Fluss beispielsweise voll, nicht oder gleitend berücksichtigt werden. So kann beispielsweise zwischen einer Funktion zur Wirkungsgradoptimierung und einer Verlustoptimierung gewechselt werden, wobei die jeweilige Optimierung voll, nicht oder teilweise wirkt, bzw. ein gleitender Übergang zwischen den Optimierungsvarianten erfolgt.

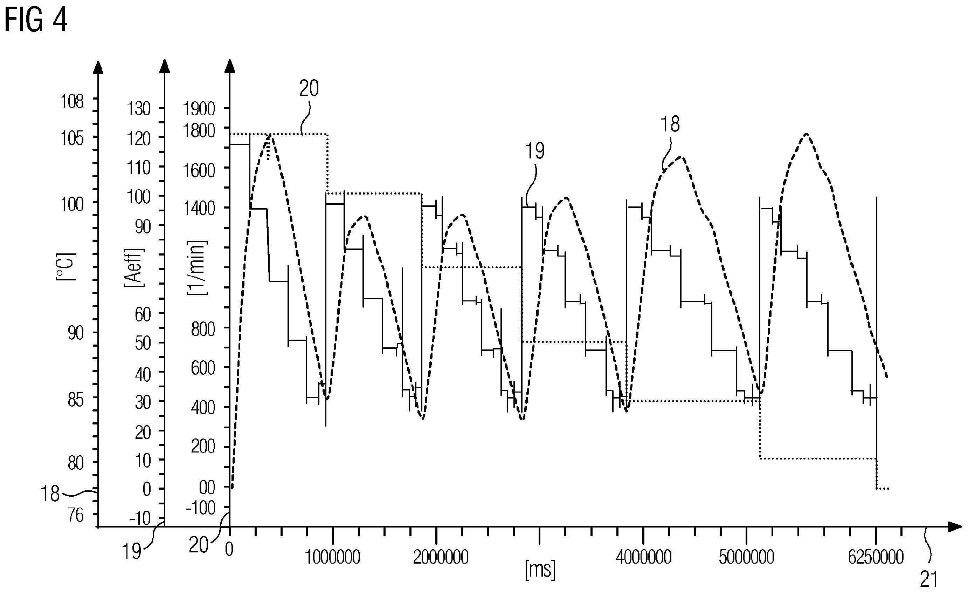

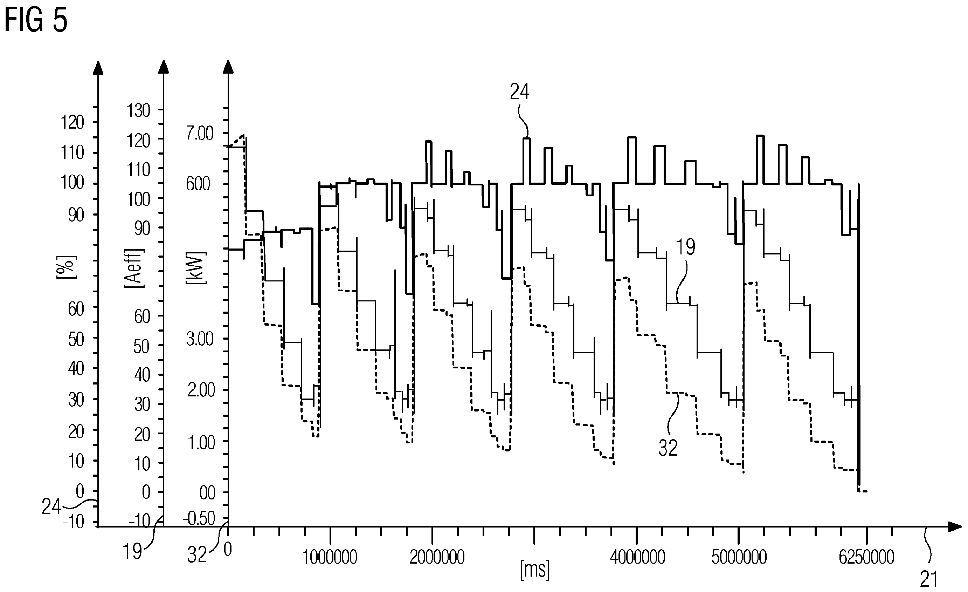

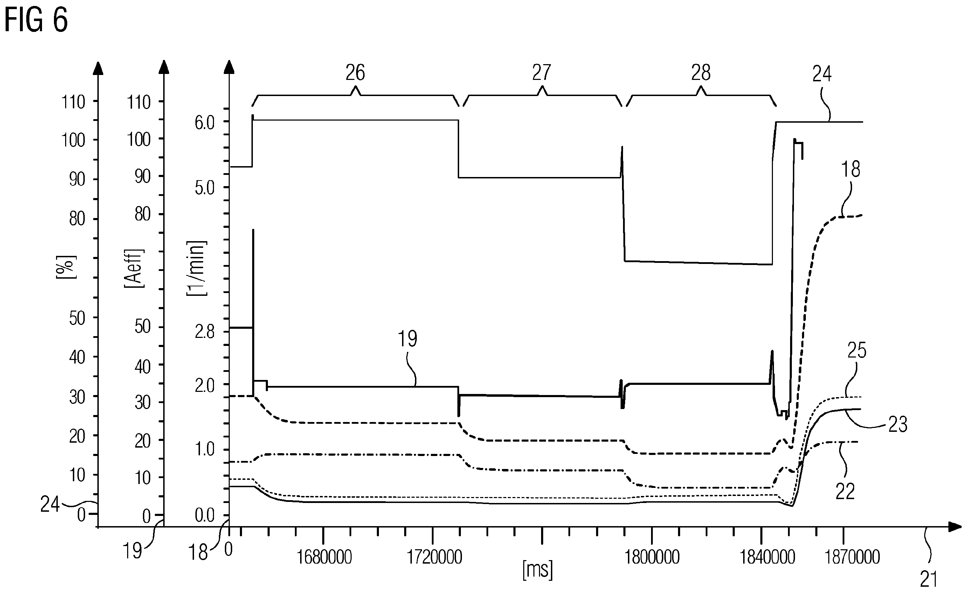

Die Darstellungen nach den Figuren 4, 5 und 6 zeigen Graphen für Messwerte bei einer Asynchronmaschine. FIG 4 zeigt Messwerte für Drehzahl, Strom und Motortemperatur. FIG 5 zeigt Messwerte für den Fluss und eine errechnete Verlustleistung. FIG 6 zeigt einen Vergleich verschiedener Optimierungen der Asynchronmaschine.

Für die Messwertaufnahme der Figuren 4 und 5 wurden 30 Lastpunkte (sechs verschiedene Drehzahlen, fünf verschiedene Drehmomente) angefahren. In allen Lastpunkten wurden drei Messungen durchgeführt:

1. ohne Flussoptimierung
2. mit Wirkungsgradoptimierung (I_sd = I_sq)
3. mit Verlustoptimierung (der minimale Verlust ist optimal).

Während der Messung wurde auch die Temperatur der Ständerwicklung aufgenommen.

Beim Punkt 2 der obigen Aufzählung erfolgt die Optimierung der Asynchronmaschine in einem Regelungsmodus (sowohl Servo als auch Vektor) beispielsweise so, dass der Erregerstrom so eingestellt wird, dass sein Betrag dem drehmomentbildenden Strom entspricht ($I_d=I_q$ Verfahren). Dieses Verfahren reduziert den Fluss insbesondere bei kleinen Belastungen. Im Überlastbereich lässt es den Fluss unverändert. Das Verfahren $I_d=I_q$ berücksichtigt nur die ohmsche Verluste, so dass der optimale Betriebspunkt nicht erreicht werden kann.

Die Darstellung nach FIG 4 zeigt die Motortemperatur (Ständerwicklungstemperatur) 18, den Drehzahlistwert 19 (ungeglättet) und den Betrag des Stromistwertes 19 (geglättet) über die Zeit 21. Als Drehzahlen wurden von links nach rechts folgende Werte gewählt: n=120%, n=100%, n=75%, n=50%, n=30% und n=10%. Wenn der Flussbetrag nicht optimiert ist (jeweils die erste Messung) erreicht der Flussbetrag den erwarteten Wert von 100%, solange keine Feldschwächung stattfindet. Die "Wirkungsgradoptimierung" (jeweils die zweite Messung) wirkt nur durch Flussreduzierung und nur bei sehr kleinen Belastungen. Das Verfahren der Verlustoptimierung wirkt in dem Beispiel fast immer: Bei kleinen Belastungen mit Flussreduzierung, bei höheren Belastungen mit Flusserhöhung. Dabei wird die Gesamtverlustleistung fast immer reduziert. Wird die Asynchronmaschine im Bereich des Nennpunktes betrieben reduziert sich das Optimierungspotential, wenn die Maschine in etwa richtig ausgelegt ist.

In der Darstellung nach FIG 5 ist neben dem Betrag des Stromistwertes 19 (geglättet) auch der Flussistwert 24 (eingestellte Flussbetrag) und die berechnete Gesamtverlustleistung 32 bei den verschiedenen Verfahren:

1. ohne Flussoptimierung
2. mit Wirkungsgradoptimierung (I_sd = I_sq)
3. mit Verlustoptimierung (der minimale Verlust ist optimal)

aufgetragen.

Im Überlastzustand ergibt sich, wie ersichtlich ist, eine Übermagnetisierung der Maschine, solange nicht die Spannungsgrenze wirkt. Weiterhin ist bei bestimmten Betriebszuständen zu beobachten, dass bei Anwendung der Verlustoptimierung (Punkt 3 von oben) bei der Flussreduzierung mehr Strom fließt als bei den anderen beiden Verfahren (Punkt 1 und 2 von oben). Die Gesamtverluste werden trotzdem reduziert. Durch die Flussreduzierung ist die Verringerung der Eisenverluste stärker als die Gesamterhöhung der Kupferverluste im Ständer und Rotor.

In der Darstellung nach FIG 6 wird auch wieder zwischen den drei Verfahren unterschieden:

1. ohne Flussoptimierung in einer ersten Phase 26
2. mit Wirkungsgradoptimierung (I_sd = I_sq) in einer zweiten Phase 27

3. mit Verlustoptimierung (der minimale Verlust ist optimal) in einer dritten Phase 28.

Dargestellt sind ferner eine berechnete Verlustleistung für den Stator 22, eine berechnete Verlustleistung für die Statorwicklung 23, der Flussistwert 24 und eine berechnete Verlustleistung für den Rotor 25.

Die in den Figuren gezeigten Graphen lassen erkennen, dass der aus den gemessenen Größen berechnete Wirkungsgrad bei den unterschiedlichen Belastungszuständen und den unterschiedlichen Optimierungen unterschiedlich ist. Verbesserungen können insbesondere bei kleineren Drehzahlen bzw. im Teillastbereich erreicht werden.

## Patentansprüche

1. Verfahren zur Ermittlung eines Flusses (4) einer Asynchronmaschine (1), wobei der Fluss (4) in Abhängigkeit eines Verlustes (7) der Asynchronmaschine (1) eingestellt wird, wobei die Einstellung des Flusses (4) lastabhängig erfolgt, **dadurch gekennzeichnet, dass** dazu ein vorgegebener Lastzustand der Asynchronmaschine (1) auf einem festen Drehmoment und einer festen Drehzahl basiert, wobei der Verlust (7) bei einem aktuellen Fluss (4), bei einem reduzierten Fluss und bei einem erhöhten Fluss berechnet wird, wobei mittels der errechneten Verluste das Minimum einer Kurve bzw. einer Funktion ermittelt wird, wobei der Fluss (4) beim minimalen Verlust eingestellt wird.

2. Verfahren nach Anspruch 1, wobei der Verlust (7) mittels eines Modells (5) ermittelt wird, wobei der Fluss (4) entweder unter 100% reduziert wird, oder über 100% erhöht wird.

3. Verfahren nach Anspruch 2, wobei das Modell (5) ein thermisches Modell (5) aufweist.

4. Verfahren nach einem der Ansprüche 1 bis 3, wobei der Fluss (4) bei einem minimalen Verlust eingestellt wird.

5. Verfahren nach einem der Ansprüche 1 bis 4, wobei der Wirkungsgrad (6) optimiert ist.

6. Verfahren nach einem der Ansprüche 1 bis 5, wobei eine Änderung des Verlustes (7) abhängig von einer Änderung des Flusses (4) errechnet wird und der Fluss (4) in Abhängigkeit des errechneten Verlustes eingestellt wird.

7. Vorrichtung zur Bestimmung eines Flusses (4) einer Asynchronmaschine (1), **dadurch gekennzeichnet, dass** die Vorrichtung zur Durchführung des Verfahrens nach einem der Ansprüche 1 bis 6 vorgesehen ist, mit einem Modell (5) zur Berechnung eines Verlustes (7) der Asynchronmaschine (1) abhängig vom Fluss der Asynchronmaschine und mit einer Auswahleinrichtung (8) zur Auswahl eines Flusses (7) abhängig vom Verlust.

8. Vorrichtung nach Anspruch 7, mit einer Aktivierungseinrichtung (31) für die Vorrichtung, abhängig von der Lastdynamik der Asynchronmaschine (1).

9. Vorrichtung nach Anspruch 8 oder 9, welche in einen Stromrichter integriert ist.

10. Vorrichtung nach einem der Ansprüche 8 bis 10, wobei mittels der Auswahleinrichtung zur Auswahl eines Flusses (4) der Wirkungsgrad der Asynchronmaschine (1) optimierbar ist.

## Claims

1. Method for determining a flux (4) of an asynchronous machine (1), wherein the flux (4) is set as a function of a loss (7) of the asynchronous machine (1), wherein the flux (4) is set as a function of load, **characterised in that** to this end a specified load state of the asynchronous machine (1) is based on a fixed torque and a fixed speed, wherein the loss (7) is calculated in the case of a current flux (4), in the case of a reduced flux and in the case of an increased flux, wherein the minimum of a curve or of a function is determined by means of the calculated losses, wherein the flux (4) with minimal loss is set.

2. Method according to claim 1, wherein the loss (7) is determined by means of a model (5), wherein the flux (4) is either reduced below 100% or is increased above 100%.

3. Method according to claim 2, wherein the model (5) has a thermal model (5).

**4.** Method according to one of claims 1 to 3, wherein the flux (4) with a minimal loss is set.

**5.** Method according to one of claims 1 to 4, wherein the efficiency (6) is optimised.

**6.** Method according to one of claims 1 to 5, wherein a change in the loss (7) is calculated as a function of a change in the flux (4) and the flux (4) is set as a function of the calculated loss.

**7.** Device for determining a flux (4) of an asynchronous machine (1), **characterised in that** the device is provided for carrying out the method according to one of claims 1 to 6, having a model (5) for calculating a loss (7) of the asynchronous machine (1) as a function of the flux of the asynchronous machine and having a selection facility (8) for the selection of a flux (7) as a function of the loss.

**8.** Device according to claim 7, having an activation facility (31) for the device, as a function of the load dynamics of the asynchronous machine (1).

**9.** Device according to claim 8 or 9, which is integrated in a rectifier.

**10.** Device according to one of claims 8 to 10, wherein the efficiency of the asynchronous machine (1) can be optimised by means of the selection facility for the selection of a flux (4).

**Revendications**

**1.** Procédé de détermination d'un flux (4) d'une machine (1) asynchrone, dans lequel on règle le flux (4) en fonction d'une perte (7) de la machine (1) asynchrone, dans lequel le réglage du flux (4) s'effectue en fonction de la charge, **caractérisé en ce qu'**un état de charge donné à l'avance de la machine (1) asynchrone repose sur un couple fixe et une vitesse de rotation fixe, dans lequel on calcule la perte (7) pour un flux (4) en cours, pour un flux réduit et pour un flux augmenté, dans lequel on détermine au moyen des pertes calculées le minimum d'une courbe ou d'une fonction, dans lequel on règle le flux (4) à une perte minimum.

**2.** Procédé suivant la revendication 1, dans lequel on détermine la perte (7) au moyen d'un modèle (5), dans lequel on réduit le flux (4) en dessous de 100 % ou on l'augmente au-dessus de 100 %.

**3.** Procédé suivant la revendication 2, dans lequel le modèle (5) a un modèle (5) thermique.

**4.** Procédé suivant l'une des revendications 1 à 3, dans lequel on règle le flux (4) pour une perte minimum.

**5.** Procédé suivant l'une des revendications 1 à 4, dans lequel on optimise le rendement (6).

**6.** Procédé suivant l'une des revendications 1 à 5, dans lequel on calcule une variation de la perte (7) en fonction d'une variation de flux (4) et on règle le flux (4) en fonction de la perte calculée.

**7.** Système de détermination d'un flux (4) d'une machine (1) asynchrone, **caractérisé en ce que** le système est prévu pour effectuer le procédé suivant l'une des revendications 1 à 6, comprenant un modèle (5) de calcul d'une perte (7) de la machine (1) asynchrone en fonction du flux de la machine asynchrone et comprenant un dispositif (8) de sélection pour le choix d'un flux (7) en fonction de la perte.

**8.** Système suivant la revendication 7, comprenant un dispositif (31) d'activation du système en fonction de la dynamique de charge de la machine (1) asynchrone.

**9.** Système suivant la revendication 8 ou 9, qui est intégré à un convertisseur de courant.

**10.** Système suivant l'une des revendications 8 à 10, dans lequel le rendement de la machine (1) asynchrone peut être optimisé au moyen du dispositif de sélection pour la sélection d'un flux (4).

FIG 1

# FIG 2

a)

14    16

17    15

b)

14    16

17    15

c)

16    14

17    15

d)

17    15

16    14

e)

17    15

16    14

FIG 3

# FIG 4

FIG 5

EP 3 652 854 B2

FIG 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0019138 B1
- WO 2005018086 A1
- DE 4138066 B4
- DE 19524654 A1
- EP 0771067 B1
- EP 2131488 A1
- DE 102013209347 A1
- EP 2811644 A1
- DE 102014213985 A1